# EUROPÄISCHE PATENTANMELDUNG

(11) **EP 4 252 707 A1**
(43) Veröffentlichungstag der Anmeldung: **04.10.2023**
(21) Anmeldenummer: 22165866.9
(22) Anmeldetag: 31.03.2022
(51) Int. Cl.: A61C 13/08, B23D 79/00, B23Q 7/00, B23Q 11/00

(54) **HERSTELLUNGSMASCHINE UND VERFAHREN ZUM HERSTELLEN EINES DENTALOBJEKTS**

(71) Anmelder: Ivoclar Vivadent AG, 9494 Schaan (LI)
(72) Erfinder: SCHÄDLER, Sebastian, 9497 Triesenberg (LI); PESCHKE, Arnd, 9498 Planken (LI)
(74) Vertreter: Baldus, Oliver

(57) **Zusammenfassung**

Die vorliegende Erfindung betrifft eine Herstellungsmaschine (100) zum Herstellen eines Dentalobjekts (101), mit einem Auffangdämpfer (103) zum Abbremsen des fallenden Dentalobjekts (101).

## Beschreibung

Die vorliegende Erfindung betrifft eine Herstellungsmaschine zum Herstellen eines Dentalobjekts und Verfahren zum Herstellen eines Dentalobjekts.

Beim Fräsen eines Dentalobjekts bleibt dieses mit einem Haltesteg am Rohling verbunden und wird anschließend manuell getrennt. Je nach Durchmesser des Haltestegs und Position, werden die im CAD gestalteten anatomischen Strukturen dadurch stark beeinträchtigt.

Eine Platzierung des Haltestegs auf approximalen oder okklusalen Flächen oder kavitätenseitig führt zu großen Beeinträchtigungen und Ungenauigkeiten der finalen Restauration. Aktuell werden die Haltestege bei der Fertigung so dimensioniert, dass die Restauration am Rohling befestigt bleibt. Dies erfordert eine anschließende manuelle Trennung des Haltsteges. Wenn der Haltesteg vollautomatisch getrennt oder im Durchmesser reduziert wird, fällt die Restauration ab und prallt auf den Boden des Fräsraums. Bei diesem Aufprall kann die Restauration beschädigt werden. In den Maschinen wird die Aufprallhöhe daher geringgehalten, damit im Falle einer Fraktur des Haltesteges keine zu hohe Schadenswahrscheinlichkeit entsteht.

Hierdurch kann die klinische Funktion der Restauration beeinträchtigt werden oder die Restauration unbrauchbar werden. Speziell bei brüchigen oder filigranen Restaurationen lässt sich ein Restrisiko einer Beschädigung kaum ausschließen. Auch falls direkt anschließend eine weitere Restauration gefertigt wird, besteht die Gefahr, dass die beiden Restaurationen aneinanderstoßen und sich gegenseitig beschädigen.

Es ist die technische Aufgabe der vorliegenden Erfindung die Beschädigung eines Dentalobjektes nach der Herstellung in einer Herstellungsmaschine zu verhindern.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch eine Herstellungsmaschine zum Herstellen eines Dentalobjekts umfasst, mit einem Auffangdämpfer zum Abbremsen des fallenden Dentalobjekts. Durch den Auffangdämpfer wird der technische Vorteil erreicht, dass kinetische Energie des fallenden Dentalobjekts wirksam absorbiert werden kann und eine Beschädigung des hergestellten Dentalobjekts verhindert wird.

In einer technisch vorteilhaften Ausführungsform der Herstellungsmaschine umfasst der Auffangdämpfer einen elastischen Kunststoff, einen Schwamm, ein Kissen, ein Netz, einen Sand, ein Granulat, ein Sieb, ein Förderband, eine schiefe oder unebene Fläche, eine Membran oder ein Medium. Das Sieb kann beweglich oder kippbar sein. Das Förderband kann zum Transportieren des Dentalobjekts dienen. Dadurch wird beispielsweise der technische Vorteil erreicht, dass Auffangdämpfer verwendet werden, die die kinetische Energie effektiv absorbieren können.

In einer weiteren technisch vorteilhaften Ausführungsform der Herstellungsmaschine wird der Auffangdämpfer durch einen Behälter gebildet. Der Behälter kann als ein Flüssigkeitsbehälter zur Aufnahme einer Flüssigkeit ausgebildet sein. Dadurch wird beispielsweise der technische Vorteil erreicht, dass selbst brüchige oder filigrane Dentalobjekte effektiv aufgefangen werden können.

In einer weiteren technisch vorteilhaften Ausführungsform der Herstellungsmaschine umfasst der Boden des Behälters eine schiefe Fläche. Die schiefe Fläche kann als Auffangdämpfer verwendet werden. Dadurch wird beispielsweise der technische Vorteil erreicht, dass das Dentalobjekt an der Fläche zu einem vorgesehenen Ort heruntergleiten kann.

In einer weiteren technisch vorteilhaften Ausführungsform der Herstellungsmaschine umfasst der Behälter ein Sieb zum Auffangen des Dentalobjektes. Dadurch wird beispielsweise der technische Vorteil erreicht, dass ein Herabsinken des Dentalobjektes auf den Boden den Behälters verhindert werden kann.

In einer weiteren technisch vorteilhaften Ausführungsform der Herstellungsmaschine ist das Sieb aus dem Behälter bewegbar. Dadurch wird beispielsweise der technische Vorteil erreicht, dass das Dentalobjekt auf einfache Weise aus dem Behälter genommen werden kann und auf dem Sieb abtropfen kann.

In einer weiteren technisch vorteilhaften Ausführungsform der Herstellungsmaschine ist der Behälter oder das Sieb kippbar.

Dadurch wird beispielsweise der technische Vorteil erreicht, dass das Dentalobjekt seitlich entnommen werden kann.

In einer weiteren technisch vorteilhaften Ausführungsform der Herstellungsmaschine umfasst der Behälter ein Förderband zum Heraustransportieren des Dentalobjekts. Dadurch wird beispielsweise der technische Vorteil erreicht, dass das Dentalobjekt automatisch aus dem Behälter heraustransportiert werden kann.

In einer weiteren technisch vorteilhaften Ausführungsform der Herstellungsmaschine ist die Herstellungsmaschine eine Fräsmaschine oder ein 3D-Drucker. Dadurch wird beispielsweise der technische Vorteil erreicht, dass sich das Dentalobjekt auf effiziente Weise herstellen lässt.

Gemäß einem zweiten Aspekt wird die technische Aufgabe durch ein Verfahren zum Herstellen eines Dentalobjekts gelöst, mit den Schritten eines Herstellens eines Dentalobjekts; und eines Auffangens des fallenden Dentalobjektes durch einen Auffangdämpfer. Dadurch werden die gleichen technischen Vorteile wie durch die Herstellungsmaschine nach dem ersten Aspekt erreicht.

In einer technisch vorteilhaften Ausführungsform des Verfahrens wird das Dentalobjekt durch eine Flüssigkeit in dem Auffangdämpfer abgebremst. Dadurch wird beispielsweise der technische Vorteil erreicht, dass ein oder mehrere Dentalobjekte abgefedert werden können, ohne sich gegenseitig zu beschädigen.

In einer weiteren technisch vorteilhaften Ausführungsform des Verfahrens wird das Dentalobjekt durch ein bewegliches Sieb oder ein Förderband aus der Flüssigkeit herausbewegt. Dadurch wird beispielsweise der technische Vorteil erreicht, dass das Dentalobjekt auf einfache Weise aus dem Behälter genommen werden kann und auf dem Sieb abtropfen kann.

In einer weiteren technisch vorteilhaften Ausführungsform des Verfahrens wird das Sieb zum Auswerfen des Dentalobjekts gekippt. Dadurch wird beispielsweise der technische Vorteil erreicht, dass das Dentalobjekt seitlich an vorgegebene Stelle entnommen werden kann.

In einer weiteren technisch vorteilhaften Ausführungsform des Verfahrens wird das Sieb zum Auswerfen des Dentalobjekts gedreht. Dadurch wird beispielsweise der technische Vorteil erreicht, dass das Dentalobjekt nach außen bewegt wird.

In einer weiteren technisch vorteilhaften Ausführungsform des Verfahrens ist das Verfahren ein Fräsverfahren oder ein dreidimensionales Druckverfahren. Dadurch wird beispielsweise der technische Vorteil erreicht, dass das Dentalobjekt auf einfache Weise hergestellt werden kann.

Ausführungsbeispiele der Erfindung sind in den Zeichnungen dargestellt und werden im Folgenden näher beschrieben.

Es zeigen:
- Fig. 1: eine schematische Darstellung einer Herstellungsmaschine;
- Fig. 2A: eine weitere Ausführungsform der Herstellungsmaschine mit einem Förderband;
- Fig. 2B: eine weitere Ausführungsform der Herstellungsmaschine mit einem beweglichen Sieb in einem Behälter;
- Fig. 3A: eine weitere Ausführungsformen der Herstellungsmaschine mit einem Sieb;
- Fig. 3B: eine weitere Ausführungsformen der Herstellungsmaschine mit einem Kissen;
- Fig. 3C: eine weitere Ausführungsformen der Herstellungsmaschine mit einem Granulat;
- Fig. 4: eine weitere Ausführungsformen der Herstellungsmaschine mit einer Beschichtungsdüse; und
- Fig. 5: ein Blockdiagramm eines Verfahrens zum Herstellen eines Dentalobjektes.

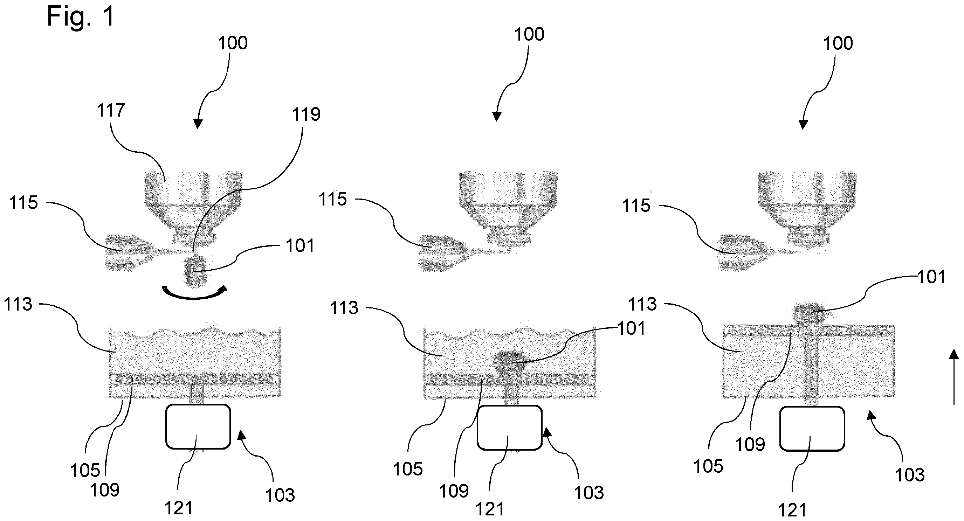

Fig. 1 zeigt eine schematische Darstellung einer Herstellungsmaschine 100. Die Herstellungsmaschine 100 dient zum Herstellen eine Dentalobjekts 101. Ein Dentalobjekt 101 ist beispielsweise eine Krone, eine Brücke, ein Veneer, ein Abutment, ein Inlay, ein Onlay, eine Schiene oder eine Teil- oder Vollprothese. Im Allgemeinen kann das Dentalobjekt 101 jedes Objekt im Dentalbereich sein, das im Rahmen einer Dentalbehandlung hergestellt werden soll.

Die Herstellungsmaschine 100 kann beispielsweise eine Fräsmaschine mit einem Fräskopf 115 sein. Das Dentalobjekt 101 ist an dem Drehspindel 117 befestigt, der das Dentalobjekt 101 gegenüber dem Fräskopf 115 dreht. Durch die Fräsmaschine wird das rotierende Dentalobjekt 101 mittels eines spanabhebenden Verfahrens hergestellt. Zum Schluss der Bearbeitung bleibt das Dentalobjekt 101 noch über einen dünnen Haltesteg 119 mit dem Drehspindel 117 verbunden. Wird anschließend auch der Haltesteg 119 getrennt, fällt das Dentalobjekt 101 unter dem Einfluss der Schwerkraft eine Strecke im freien Fall nach unten.

Um eine Beschädigung des Dentalobjekts 101 beim Auftreffen zu verhindern, umfasst der Fräsraum der Herstellungsmaschine 100 einen oben offenen Behälter 105 als Auffangdämpfer 103. Der Behälter 105 ist unterhalb der Drehspindel 117 angeordnet, an der das Dentalobjekt 101 gefräst wird.

Der Behälter 105 umfasst eine Flüssigkeit, wie Wasser, oder ein anderes Medium, um die Fallgeschwindigkeit des Dentalobjektes 100 zu reduzieren, ohne dieses zu beschädigen. Die Flüssigkeit kann eine Kühl- oder Schleifflüssigkeit sein, die während des Fertigungsprozesses zum Kühlen des Dentalobjektes 101 verwendet wird und dabei vom Behälter 105 aufgefangen wird oder durch ein Granulat oder einen Sand gebildet werden. Im Allgemeinen kann jedoch auch ein anderer Auffangdämpfer zum Abbremsen des Dentalobjekts 101 verwendet werden.

Statt Flüssigkeit kann als Medium auch ein Kugelbettsand oder ein Granulat in einer Wanne verwendet werden. Weitere Auffangdämpfer 103 können andere Materialien sein, die eine federnde und dämpfende Wirkung erzielen, wie beispielsweise ein weicher Kunststoff, ein Schwamm, ein Kissen, ein Netz, eine Dämpfmatte oder eine Membran. Auch durch diese Auffangdämpfer 103 kann eine Beschädigung des Dentalobjekts verhindert werden.

Beim Eintauchen in die Flüssigkeit wird die Fallgeschwindigkeit des Dentalobjektes 101 derart reduziert, dass dieses in einer langsamen Geschwindigkeit auf den Grund des Behälters 105 fällt oder gleitet. Auch wenn ein zweites Dentalobjekt 101 hergestellt und aufgefangen wird, so wird auch dieses durch die bremsende Wirkung der Flüssigkeit verlangsamt. Daher hat auch das andere Dentalobjekt 101 eine verringerte Aufprallgeschwindigkeit, wenn dieses mit einer dem anderen Dentalobjekt 101 auf dem Grund der Flüssigkeit zusammenstößt. Dadurch lassen sich zahlreiche Dentalobjekte 101 nacheinander fertigen, ohne dass diese sich gegenseitig beschädigen.

Das oder die gefrästen Dentalobjekte 101 können vom freien Fall aufgefangen werden, ohne dass diese beschädigt werden. Der Benutzer erhält dann Dentalobjekte 101 mit genauerer Form. Zudem braucht der Haltesteg 119, mit dem das Dentalobjekte 101 an der Drehspindel 117 befestigt ist, nicht manuell getrennt werden, sondern kann im Rahmen des Fräsprozesses getrennt werden. Der Haltesteg 117 kann am Ende der Herstellung auf einen minimalen Durchmesser reduziert oder vollständig abgetrennt werden. Dadurch entsteht ein geringerer Bedarf an manueller Nachbearbeitung.

In der Flüssigkeit ist ein höhenverstellbares Sieb 109. Das Sieb 109 kann durch eine Hubeinheit 121 in der Höhe verfahren werden. Während der Fertigung und dem Abtrennprozess des Dentalobjekts befindet sich das Sieb 109 in einer so tiefen Position, dass das Dentalobjekt 109 beim Abtrennen in die Spülflüssigkeit fällt und dadurch abgebremst wird. Nach dem Abbremsen durch die Flüssigkeit trifft das Dentalobjekt 101 auf das Sieb 109, das sich in der Flüssigkeit befindet.

Nach dem Beenden des Fertigungsvorgangs bewegt sich das Sieb 109 nach oben bis, bis sich dieses oberhalb der Oberfläche der Flüssigkeit befindet. Zu diesem Zweck bewegt die Hubeinheit 121 das Sieb 109 in vertikaler Richtung. Damit wird das Dentalobjekt 101 in eine Position gefördert, in der das Dentalobjekt 101 abtropfen kann und es der Benutzer auf einfache Weise entnehmen kann.

Die anatomischen Strukturen des Dentalobjektes 101 können exakt gemäß einer CAD-Vorlage ausgearbeitet werden. Die Herstellungsmaschine 100 verhindert, dass selbst äußerst spröde Materialien des Dentalobjektes 101 nach dem Abtrennen beschädigt werden. Dadurch wird ein Aufwand für eine manuelle Nacharbeit reduziert, anatomische Strukturen des Dentalobjektes 101 können genauer gefertigt werden und es können zusätzliche Möglichkeiten für die Position des Haltesteges zu realisiert werden. Eine Beschädigung beim Herabfallen des Dentalobjektes 101 wird ausgeschlossen.

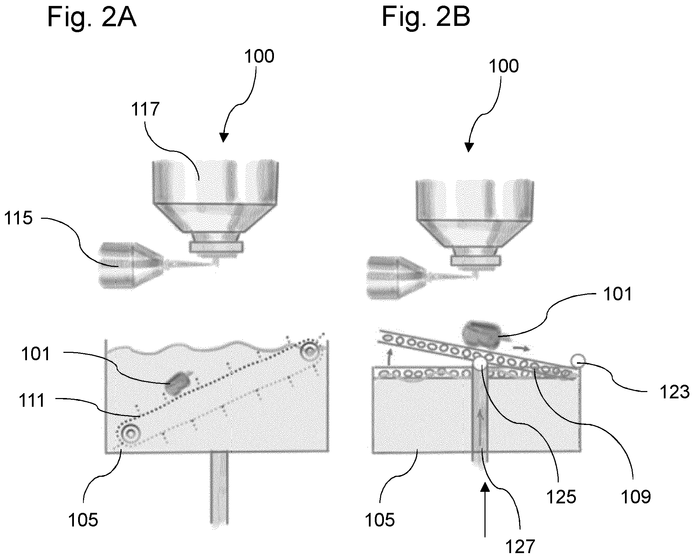

Fig. 2A zeigt eine weitere Ausführungsform der Herstellungsmaschine 100. Der Behälter 105 umfasst ein Förderband 111 das in der Flüssigkeit angeordnet ist und auf das Dentalobjekt 101 fällt. Der Behälter 105 kann als Flüssigkeitsbehälter ausgebildet sein. In den Flüssigkeitsbehälter kann eine Flüssigkeit aufgenommen werden, die zum Abbremsen des fallenden Dentalobjekts dient. Im Allgemeinen kann jedoch auch ein Behälter 103 verwendet werden, in dem ein anderer Auffangdämpfer 103 als eine Flüssigkeit angeordnet ist.

Das Förderband 111 ist schräg in dem Behälter 105 angeordnet und kann das Dentalobjekt 101 aus der Flüssigkeit herausbefördern. Dadurch kann das Dentalobjekt 101 an einer bestimmten Position an den Benutzer übergeben werden.

Die Fläche auf dem Grund des Behälters 105 kann ebenfalls schräg, muldenförmig oder trichterförmig ausgebildet sein, sodass das Dentalobjekt 101 über die Schwerkraft in eine bestimmte Richtung bewegt wird. Das Dentalobjekt 101 sinkt dann an die tiefste Stelle im Behälter 105. Allerdings kann das Dentalobjekt 101 auch über ein anderen Fördermechanismus, wie ein einen Drehteller oder ein Siebeinsatz aus dem Fallbereich der Flüssigkeit bewegt wird.

Fig. 2B zeigt eine weitere Ausführungsform der Herstellungsmaschine 100. Die Herstellungsmaschine 100 kann aber auch ein Sieb 109 umfassen, das am Ende der Hubstange 127 an einem Drehpunkt 125 drehbar gelagert ist. Wird das Sieb 109 nach oben gefahren, stößt dieses an den seitlichen Anschlagspunkt 123 und neigt sich hierdurch zur Seite. Auf diese Weise kann das Dentalobjekt 101 auf einfache Weise aus der Flüssigkeit entfernt werden und anschließend seitlich ausgegeben werden. Alternativ kann das Dentalobjekt 101 auch über eine Rutsche aus der Fallzone befördert werden und seitlich ausgegeben werden.

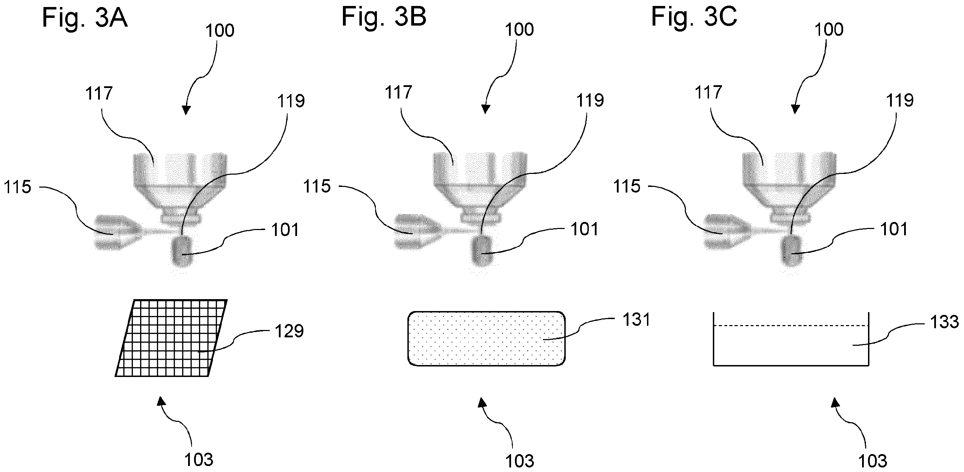

Fig. 3A zeigt eine weitere Ausführungsformen der Herstellungsmaschine mit einem elastischen Sieb oder Netz 129 als Auffangdämpfer 103. Fig. 3B zeigt eine weitere Ausführungsformen der Herstellungsmaschine mit einem elastischen Kissen oder Schwamm 131 als Auffangdämpfer 103. Fig. 3C zeigt eine weitere Ausführungsformen der Herstellungsmaschine mit einem Granulat oder Sand 133 als Auffangdämpfer 103. Im Allgemeinen kann der Auffangdämpfer 103 auch durch ein Förderband, eine schiefe Fläche oder eine Membran gebildet sein. Der Auffangdämpfer 103 kann beispielsweise durch ein elastisches Material gebildet sein, das um das Dentalobjekt 101 herum angeordnet wird und anschließend wieder beseitigt wird, wie beispielsweise ein Schaum, ein Wachs, oder ein lichthärtendes Monomer sein. Das elastische Material kann das Dentalobjekt 103 ganz oder teilweise umgeben.

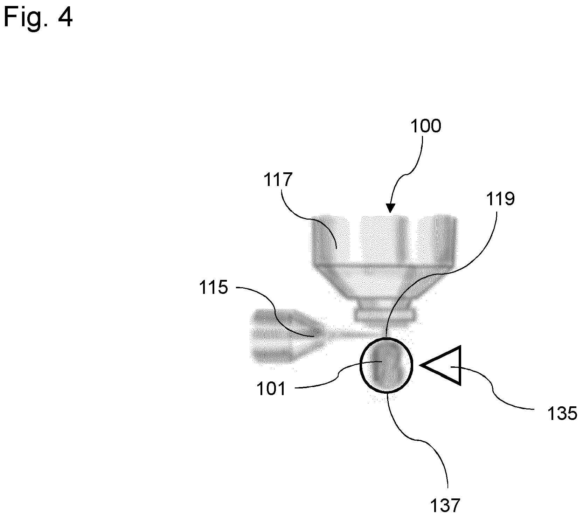

Fig. 4 zeigt eine weitere Ausführungsformen der Herstellungsmaschine mit einer Beschichtungsdüse 135. Das Dentalobjekt 101 wird vor dem freien Fall durch die Beschichtungsdüse 135 zum Schutz mit einem Medium 137 als Auffangdämpfer beschichtet. Dieses Medium 137 als Auffangdämpfer kann beispielsweise ein Schaum, ein Wachs, oder ein lichthärtendes Monomer sein, das um das Dentalobjekt 101 herum angeordnet wird und anschließend wieder beseitigt wird. Das Medium dämpft den Aufprall des fallenden Dentalobjekts 101 und verhindert eine Beschädigung. Im Allgemeinen kann das Medium 137 jedes Medium sein, das geeignet ist, den Aufprall des fallenden Dentalobjektes 101 zu dämpfen.

Das Auftragen des Mediums 137 wird beispielsweise durch die Beschichtungsdüse 135 an der Drehspindel 117 erreicht. Dadurch kann das sich drehende Dentalobjekt 101 vollständig von dem Medium 137 umschlossen werden.

Das Medium 137 kann aus einem Objekthalter austreten oder das Medium 137 kann an dem Dentalobjekt 101 von oben nach unten fließen. Das Medium 137 kann auch nur punktuell oder in Teilbereichen an dem Dentalobjekt 101 angebracht werden, um beim Aufprall lediglich bestimmte Flächen zu schützen.

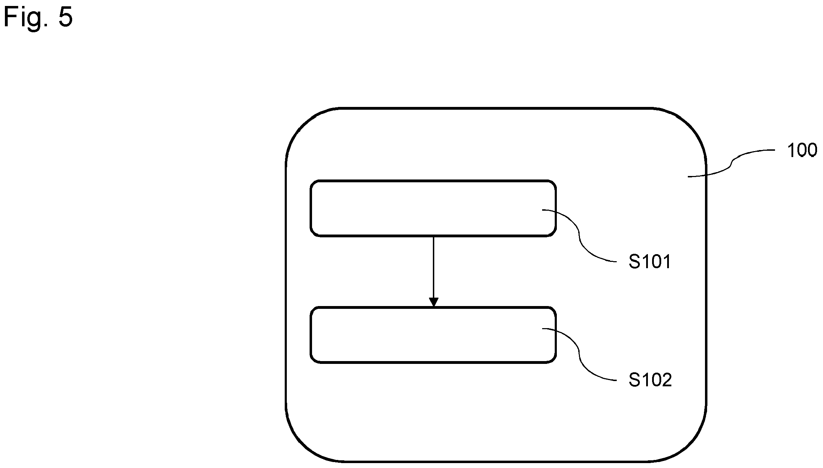

Fig. 5 zeigt ein Blockdiagramm eines Verfahrens zum Herstellen des Dentalobjektes 101. Das Verfahren wird innerhalb einer Herstellungsmaschine 200 für das Herstellungsverfahren durchgeführt. Zunächst wird das Dentalobjekt 101 in Schritt S101 hergestellt. Dabei wird das Dentalobjekt 101 von einer Herstellungsplattform oder Drehspindel gelöst. Danach wird das fallende Dentalobjektes 101 in Schritt S102 durch den Auffangdämpfer 103 aufgefangen. Das Herstellungsverfahren kann ein additives Herstellungsverfahren sein, wie beispielsweise ein 3D-Druckverfahren oder ein subtraktives Herstellungsverfahren sein, wie beispielsweise ein Fräsverfahren.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Herstellungsmaschine
- 101: Dentalobjekt
- 103: Auffangdämpfer
- 105: Behälter
- 107: schiefe Fläche
- 109: Sieb
- 111: Förderband
- 113: Flüssigkeit
- 115: Fräskopf
- 117: Drehspindel
- 119: Haltesteg
- 121: Hubeinheit
- 123: Anschlagspunkt
- 125: Drehpunkt
- 127: Hubstange
- 129: Sieb
- 131: Kissen
- 133: Granulat
- 135: Beschichtungsdüse
- 137: Medium

## Patentansprüche

1. Herstellungsmaschine (100) zum Herstellen eines Dentalobjekts (101), mit:
- einem Auffangdämpfer (103) zum Abbremsen des fallenden Dentalobjekts (101).

2. Herstellungsmaschine (100) nach Anspruch 1, wobei der Auffangdämpfer (103) durch einen elastischen Kunststoff, einen Schwamm, ein Kissen, ein Netz, einen Sand, ein Granulat, ein Sieb, ein Förderband, eine schiefe oder unebene Fläche, eine Membran oder ein Medium gebildet wird.

3. Herstellungsmaschine (100) nach einem der vorangehenden Ansprüche, wobei der Auffangdämpfer (103) durch einen Behälter (105) gebildet wird.

4. Herstellungsmaschine (100) nach Anspruch 3, wobei der Boden des Behälters (105) eine schiefe Fläche (107) umfasst.

5. Herstellungsmaschine (100) nach Anspruch 3 oder 4, wobei der Behälter (105) ein Sieb (109) zum Auffangen des Dentalobjektes (101) umfasst.

6. Herstellungsmaschine (100) nach Anspruch 5, wobei das Sieb (109) aus dem Behälter (105) bewegbar ist.

7. Herstellungsmaschine (100) nach Anspruch 5 oder 6, wobei der Behälter oder das Sieb (109) kippbar ist.

8. Herstellungsmaschine (100) nach einem der Ansprüche 3 bis 8, wobei der Behälter (105) ein Förderband (111) zum Heraustransportieren des Dentalobjekts (101) umfasst.

9. Herstellungsmaschine (100) nach einem der vorangehenden Ansprüche, wobei die Herstellungsmaschine (100) eine Fräsmaschine oder ein 3D-Drucker ist.

10. Verfahren zum Herstellen eines Dentalobjekts (101), mit den Schritten:
- Herstellen (S101) eines Dentalobjekts (101); und
- Auffangen (S102) des fallenden Dentalobjektes (101) durch einen Auffangdämpfer (103).

11. Verfahren nach Anspruch 10, wobei das Dentalobjekt (101) durch eine Flüssigkeit (113) in dem Auffangdämpfer (103) abgebremst wird.

12. Verfahren nach einem der Ansprüche 11, wobei das Dentalobjekt (101) durch ein bewegliches Sieb (105) oder ein Förderband (107) aus der Flüssigkeit (113) herausbewegt wird.

13. Verfahren nach Anspruch 12, wobei das Sieb (109) zum Auswerfen des Dentalobjekts (101) gekippt wird.

14. Verfahren nach Anspruch 12, wobei das Sieb (109) zum Auswerfen des Dentalobjekts (101) gedreht wird.

15. Verfahren nach einem der Ansprüche 10 bis 14, wobei das Verfahren ein Fräsverfahren oder ein dreidimensionales Druckverfahren ist.
